(19)

Europäisches
Patentamt
European
Patent Office
Office européen
des brevets

(11) **EP 2 251 822 A1**

(12) **EUROPEAN PATENT APPLICATION**

(43) Date of publication:
**17.11.2010 Bulletin 2010/46**

(51) Int Cl.:
***G06Q 10/00*** *(2006.01)*  ***G06Q 30/00*** *(2006.01)*

(21) Application number: **09011338.2**

(22) Date of filing: **03.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **12.05.2009 EP 09006420**

(71) Applicant: **SIEMENS AKTIENGESELLSCHAFT 80333 München (DE)**

(72) Inventor: **Eger, Kolja, Dr. 85521 Ottobrunn (DE)**

(54) **A method for load balancing in a power system**

(57)    The present invention refers to a mechanism for load balancing in a power system, said power system comprising at least one power producer entity, at least one power consumer entity, at least one broker entity, and a resource layer. Said load balancing is performed by said at least one broker entity at said resource layer, wherein said at least one broker entity is configured to behave like said at least one consumer entity and to trade with said at least one producer entity for electricity. The present invention provides an improved mechanism for load balancing in power systems and can be applied with regard to all power systems utilizing and/or requiring a mechanism for load balancing.

FIG 2

EP 2 251 822 A1

**Description**

FIELD OF THE INVENTION

The present invention refers to power balancing in power systems. In particular, the present invention refers to a method and an entity configured for performing power balancing in a power system and to a system comprising said entity.

BACKGROUND OF THE INVENTION

A power system evolves from a centralized system with a small number of large generators towards a liberalized open market with an increasing number of small distributed energy resources, in particular renewables. Furthermore, the availability of smart meters coupled with home energy management at the consumers is increasing. Hence, also the control of power consumption with demand side management becomes feasible. In the long term, storage devices like battery banks will allow to buffer electricity in larger amounts efficiently and economically. In summary, the number of controllable appliances increases considerably.

To ensure the stability of power systems with a large number of distributed energy resources (DER), control and balancing methods or algorithms must also be distributed. Furthermore, the methods or algorithms have to cope with insufficient information, a large number of variables and appliances under the control of different entities with different objectives. New energy balancing methods or algorithms are frequently studied in the domain of multi-agent systems (see [1] and the references therein) and, to provide incentives to the different stakeholders, market-oriented mechanisms, e.g. double auctions, are applied (see [3], [4], [5]). The current approaches provide power market-mechanisms that are restricted to a single type of auction, and central servers to host the market or auction platform. However, when the number of DERs increases and sellers and buyers are interested in different services for different time periods, this approach lacks flexibility and scalability.

When performing power balancing methods in power systems, one restriction is a fixed time interval for which power is allocated. Often auctions are carried out for every 15 minute time slot. This restriction has the following shortcomings. On the one hand, renewable resources like photovoltaics and wind power are not able to guarantee constant power generation but are fluctuating over time. On the other hand, intelligent loads are interested in allocations for multiple consecutive time slots. Hence, different market participants are interested in the allocation of power on different time scales.

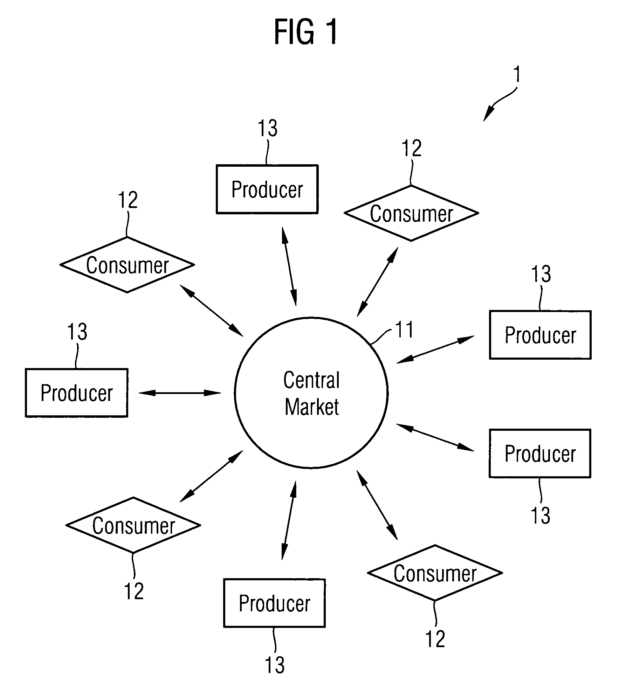

With the liberalization of the energy market and the increasing number of distributed energy resources, new market models based on monetary or virtual prices are developed to realize new power balancing methods, approaches or algorithms. Electronic market places are proposed in different research papers (e.g. in [3], [4], [5] and the references therein). Although the market participants in these models act autonomously depending on their individual goals, some form of centralized coordination is assumed. For example, in [3] one or multiple PowerMatcher run a Walrasian auction and in [5] order books for each commodity are assumed to be hosted in a centralized way. As sketched in Fig. 1, the architecture is centralized even if market participants act autonomously. In Fig. 1, the coordination of power balancing in a power system 1 is performed by a central node, entity or component 11 representing a kind of a central market node, entity or component 11. The producers of power or producer nodes, entities or components respectively 13 communicate with power consumers or consumer nodes, entities or components respectively 12 via the central market node, entity or component 11, which supports load balanced distribution of power in the power system 1.

Thus, the known power balancing methods or mechanisms in power systems still lack flexibility and scalability. Further, the known power balancing methods or mechanisms are still unable to handle the increasing number of DERs in a flexible and efficient way and are still to inflexible to provide producers and consumers of power different services for different time periods also by an increasing number of DERs. Further, the known power balancing methods or mechanisms in power systems do not allow allocation of power on different time scales.

SUMMARY OF THE INVENTION

An object of the present invention is to provide an improved method for power balancing in power systems.

This object is achieved by a method comprising features according to claim 1, a broker entity comprising features according to claim 14, and/or a system comprising features according to claim 15.

Further embodiments of the present invention are provided with the corresponding dependent claims.

The object of the present invention is achieved by a method for load balancing in a power system, said power system comprising at least one power producer entity, at least one power consumer entity, at least one broker entity, and a resource layer, wherein said method comprises performing of said load balancing by said at least one broker entity at said resource layer, wherein said at least one broker entity is configured to behave like said at least one consumer entity and to trade with said at least one producer entity for electricity.

It has to be noted that the entities of the power system can be hardware and/or software entities, components, and/or modules.

In this way, a flexible and scalable power balancing is provided by the present invention, which does not require a central entity for coordinating the load balancing. Further, by use of the present invention the increasing number of DERs can be handled in a flexible and efficient way. Furthermore, the power balancing according to the present invention is configured or arranged such that it is able to provide producers and consumers of power different services for different time periods also by an increasing number of DERs. Additionally, the load balancing according to the present invention allows allocation of power on different time scales. Moreover, a distributed and dynamically changeable power balancing is allowed in this way.

According to an embodiment of the present invention, said at least one producer entity is aware of such consumer entities in said power system only, with which said at least one producer entity negotiates.

According to a further embodiment of the present invention, said at least one consumer entity is aware of such producer entities in said power system only, with which said at least one consumer entity negotiates.

In this way, the producer entities and/or the consumer entities can be realized as self-interested entities maximizing their own utility. Further, a distributed and dynamically changeable power balancing is allowed in this way.

According to an embodiment of the present invention, said performing of said load balancing comprises a solving of an optimization problem for said power system, wherein said optimization problem comprises a maximizing of an aggregated utility of a power allocation over all consumer entities of said power system, wherein said aggregated utility is a total of power allocations of all producer entities of a consumer entity for each consumer entity in said power system and wherein said optimization problem is constrained by capacity at producer entities of said power system. In this way it is ensured, that all participants or entities of the power system follow the object of load balancing in a general and common way.

According to a further embodiment of the present invention, said performing of said load balancing comprises a dividing of said optimization problem into sub-problems for each producer entity and for each consumer entity in said power system. In this way, a distributed load balancing is enabled, wherein simultaneously the object of load balancing in a general and common way is followed.

According to an embodiment of the present invention, said sup-problems are derived from a Lagrange function.

According to an embodiment of the present invention, said performing of said load balancing comprises a solving of said optimization problem by a distributed method. Also in this way, a distributed load balancing is enabled, wherein simultaneously the object of load balancing in a general and common way is followed.

According to an embodiment of the present invention, said distributed method is derived from a Lagrangian of said optimization problem.

According to an embodiment of the present invention, said performing of said load balancing comprises a setting of a value of willingness to pay of said at least one consumer entity and computing of a value of offered price per unit of power.

According to an embodiment of the present invention, said performing of said load balancing comprises an allocating of power generated by said at least one producer for said at least one consumer entity depending on said value of offered price per unit of power.

According to an embodiment of the present invention, wherein said performing of said load balancing comprises a determining of a fraction for said at least one consumer entity by use of a ratio between a revenue for each consumer entity in said power system, said at least one producer is aware of, and a total revenue of said at least one producer.

According to an embodiment of the present invention, said performing of said load balancing comprises a scaling of said fraction by capacity of said at least one producer.

According to an embodiment of the present invention, said method comprises a deciding of performing of said load balancing by said at least one producer entity and/or by said at least one consumer entity. In this way, the load balancing according to the present invention supports allocation of power on different time scales.

The object of the present invention is achieved also by a broker entity, wherein said broker entity is an entity of a power system, said power system comprising at least one power producer entity, at least one power consumer entity, at least one broker entity, and a resource layer, and wherein said broker entity is configured to:

- perform a load balancing in said power system at said resource layer;

- behave like said at least one consumer entity; and

- trade with said at least one producer entity for electricity.

The broker entity corresponds to the at least one broker entity sketched above with regard to the method for power balancing in a power system. In particular, the broker entity is configured to perform actions as sketched above and as described in more detail below to perform and/or enable power balancing according to the present invention in a power system.

Further, the object of the present invention is achieved by a system, wherein said system is configured to perform a load balancing in a power system and wherein said system comprises at least one broker entity as sketched above and described in more detail below.

Thus, the present invention allows an improved mechanism for power balancing in power systems.

BRIEF DESCRIPTION OF THE DRAWINGS

The present invention will be more clearly understood from the following description of the preferred embodiments of the invention read in conjunction with the attached drawings, in which:

Fig. 1 shows a power system, for which power balancing is implemented and performed according to the state of the art;

Fig. 2 shows a power system, in which the power balancing is implemented and performed according to an embodiment of the present invention;

Fig. 3 shows an architecture used for load balancing in a power system according to an embodiment of the present invention;

Fig. 4 shows participants of a power system, with regard to which a distributed method according to an embodiment of the present invention has been performed to solve an optimization problem for a power system according to the embodiment;

Fig. 5 shows participants of a power system, with regard to which a distributed method according to an embodiment of the present invention has been performed to solve an optimization problem for a power system according to the embodiment;

Fig. 6a shows a first example for a Walrasian auction for two energy producers and a changing number of energy consumers; and

Fig. 6b shows a second example for a Walrasian auction for two energy producers and a changing number of energy consumers.

DESCRIPTION OF THE PREFERRED EMBODIMENTS

With the present invention, a dynamic approach for power balancing that is based on "Catallaxy" is proposed (the term "Catallaxy" comes from the economist and Nobel Prize winner Friedrich August von Hayek). The basic concept of Catallaxy is about a system without any centralized control. Participants act according their selfish objectives. They exchange information data with others for the required resources without having a global knowledge about every detail concerning the power supply situation in the power supply system. To reach their selfish goals the participants look continuously for alternative partners. Hence, a spontaneous order evolves towards a functioning system without any central authority or central control. One advantage of the Catallaxy approach and hence of the present invention is scalability. Although more coordination messages have to be exchanged in a fully distributed system, the messaging load is distributed over all the nodes or entities in the network. Without a central server no single-point-of-failure exists in the system. Furthermore, entities do not have to trust a central authority. Another advantage of the present invention is its flexibility, originating also from the flexibility of the Catallaxy approach, because any service can be offered and any two participants can agree on any type of negotiation according to the present invention.

The present invention, concerning the technical field of power systems and in particular power balancing in the power systems, utilizes ideas developed other areas and, in particular, in the area of Catallaxy-based systems and maps, adapts and/or integrates these ideas in an appropriate way to power balancing systems. In this way, the power balancing of the present invention utilizing the ideas of Catallaxy is configured or arranged such that it has the advantages of the Catallaxy methodology.

Hence, at first, basic ideas of a Catallaxy-based system for power balancing will be outlined in following, since these ideas are integrated correspondingly into the mechanism of power balancing according to the present invention and since the present invention represents a Catallaxy-based mechanism for power balancing.

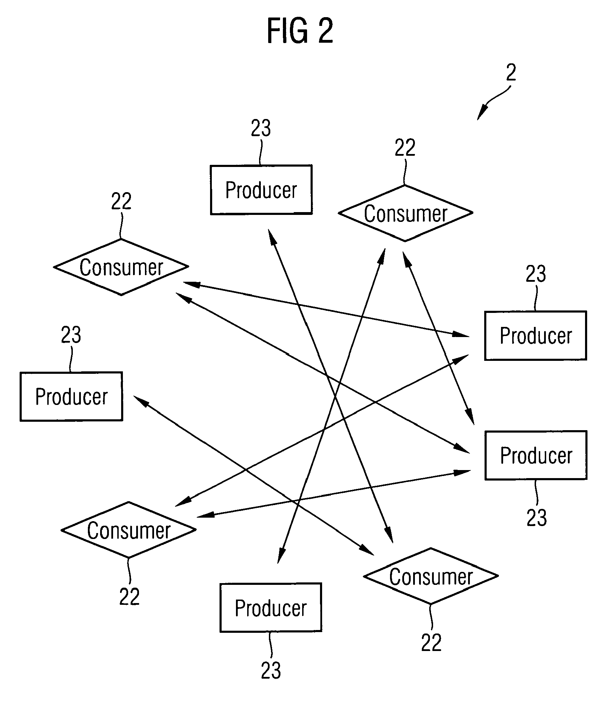

As mentioned, the present invention refers to a Catallaxy-based approach for power balancing. The main idea of Catallaxy is a system without a central authority or control unit. Participants are self-organizing and follow their own objectives. As sketched in Fig. 2 the topology of the distributed system is a meshed network. Furthermore, it is not static but changes over time depending on the users' strategy. These features can be seen as being similar to peer-to-peer (P2P) networks. P2P networks offer a scalable and resilient ICT architecture. In contrast to client/sever systems, where resources are offered at dedicated servers, a P2P system is a self-organizing system of equal, autonomous entities (peers) which aims for the shared usage of distributed resources without central control. Examples of the application of the P2P concepts to power systems, in particular to micro grids, are presented, e.g., in [9].

Fig. 2 shows a power system 2, in which power balancing is implemented and performed according to an embodiment of the present invention.

The power system 2 comprises at least one producer of power or producer node, entity or component respectively 23 and at least one power consumer or consumer node, entity or component respectively 22. The producers of power or producer entities 23 can be, for example, nuclear power stations, wind turbine systems, hydro-electric power stations, photovoltaic power stations etc. The power consumer can be, for example, a single intelligent load or a home energy management system controlling several loads according to users' settings. The network of negotiations between producers and consumers built for power balancing according to the present embodiment of the present invention is a meshed network, which is self-organizing and is not static but changes. According to the present embodiment of the present invention the power balancing is performed by communication between producers of power or producer entities 23 respectively and power consumers or consumer entities 22 respectively, which consume power provided by producer entities 23. The corresponding communications are pointed out by the edges or bidirectional arrows connecting the communicating producer entities 23 and consumer entities 22. In the power system 2, a communication is established between a consumer entity 22 and a producer entity 23 if the corresponding consumer entity 22 consumes or would consume power provided by the corresponding producer entity 23 and/or negotiates or would negotiate with the corresponding producer entity 23 with regard to power, intended to be consumed by the consumer entity 22. The consumer entities 22, the producer entities 23, and the corresponding communication links or edges form the power balancing network according to the present embodiment of the present invention.

The Catallaxy approach introduced by Hayek is based on observations on real systems with human interactions. So far, no formal description of this mechanism exists. However, electronic systems in different technical domains are also using ideas of the Catallaxy concept. Thus, for example, Eymann et al. outline in [10] a Catallaxy based market for Grid computing. In [10] three main characteristics of the Catallaxy approach have been identified:

(i) participants are self-interested entities maximizing their own utility;

(ii) each entity has only limited information about the whole system and can not accurately determine the benefit of alternative actions; it makes decisions also when uncertainty is present; and

(iii) the system is a set of communications between its participants, it is not centralized but distributed and it is changing dynamically because entities look for alternative partners or participants.

Three main characteristics of the Catallaxy approach are taken into account by the present invention. In particular, they are implemented in the power balancing mechanism according to the present invention.

According to the present invention, the Catallaxy-based model is applied to power systems for balancing demand and supply in a distributed way. By the present invention, a two-tier architecture consisting of a resource layer and a service layer is applied or proposed, wherein the providing of the service layer can be seen as similar to the approach for Grid Computing in [10].

The separation of resources and services according to the present invention enables provisioning of basic services, service reuse, and efficient service composition to create advanced services.

According to an embodiment of the present invention, basic services are directly deployed on top of the resource layer, e.g. supply power of 1000W from 8 a.m. to 8.15 a.m. Further, according to the embodiment of the present invention, in the service layer basic services can be combined such that users can be provided with more complex services, e.g. provide power for the household "X" for 24 hrs.

The layered approach enabled by the present invention has several advantages: end-users do not have to cope with getting power on a small time-scale like minutes or hours. Hence, they need not rely on forecasts about future power supply/demand. According to an embodiment of the present invention, the complex service is offered to the users, consumers, or consumer entities respectively by energy brokers or energy broker entities respectively, that assemble the complex service by a set of basic services.

According to an embodiment of the present invention, energy brokers or energy broker entities respectively are configured to contract several generators and loads with different supply and demand characteristics to balance their contracted energy allocations. Furthermore, according to an embodiment of the present invention, they are configured to offer different services to the intelligent loads such that loads are more flexible in the amount and time interval. If a broker or a broker entity respectively has contracts with several households or consumer entities respectively, the stochastic consumption is flattened by multiplexing according to an embodiment of the present invention.

According to an embodiment of the present invention, the broker or broker entity respectively is configured to get power from energy providers or provider entities respectively. According to an embodiment of the present invention, all transactions are done bilateral and different forms of negotiation are possible. Since end-users or consumer entities respectively can be configured to contact several brokers or broker entities respectively and since brokers or broker entities respectively are configured to negotiate with different power providers or provider entities respectively, a fully distributed systems evolves. In contrast to a centralized system, complete information about all power demands and power supplies has not to be available at one node or entity. Furthermore, a node or entity with more information and more connections to others for negotiation is likely to achieve better supply conditions. However, disproportionate amounts of information gathering or data exchange may also come at an additional cost, regulating the information distribution within the system.

The flexibility of the Catallaxy based approach, provided according to the present invention, ensures a seamless deployment of new control concepts, because different concepts can coexist in parallel. For example, nowadays most small DERs are passive. The owners or the producer entities respectively are free in their decision to apply new control concepts or stick to the old ones. However, with better control concepts they might provide higher-prized services. Similar households or consumer entities respectively may choose a tariff with a fixed price for each kWh. However, a tariff with dynamic prices according to the actual power balance should be cheaper to them.

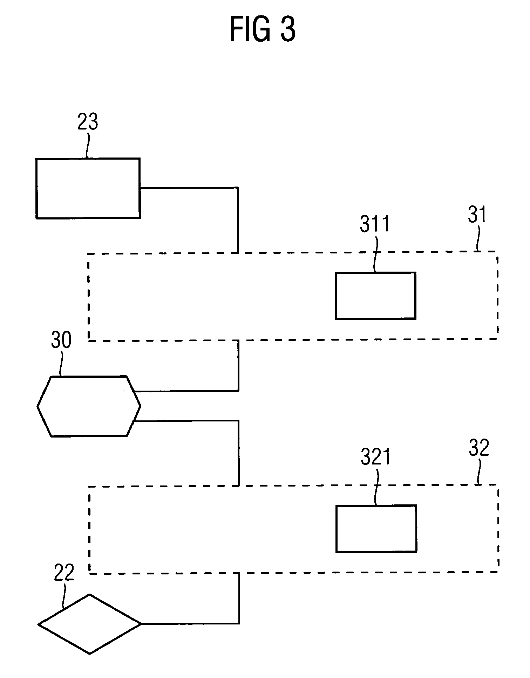

Fig. 3 shows the two-tier architecture 3 used for load balancing according to an embodiment of the present invention.

In Fig. 3, three entities are provided according to the present embodiment: a producer entity 23, a consumer entity 22, and a broker entity 30. These entities 23, 22, and 30 are configured to act as sketched above and as discussed in more detail below. Further, the architecture 3 comprises two layers: the resource layer 31 and the service layer 32. The producer entity 23 is connected to the resource layer 31. In particular, the producer entity 23 is configured to provide information on its resources 311 to the resource layer 31. The consumer entity 22 is connected to the service layer 32 and is configured to provide information data 321 on the power required, used and/or intended to be used by the consumer entity 22 to the service layer 32. The broker entity 30 is connected to both layers 31, 32 and is configured to act as sketched above and as discussed in more detail below. In particular, the broker entity 30 is configured to act and/or to generate decisions based on the information data 311 available in the resource layer 31 and/or on the information data 321 available in the service layer 32. Communication between the entities 22, 23, 30 is performed via the layers 31, 32 to which the entities 22, 23, 30 are connected to.

In Fig. 3, a single producer entity 23, a single consumer entity 22, and a single broker entity 30 are shown. However, it has to be noted, that a plurality of producer entities 23 (i.e. at least one producer entity 23) can be linked to the resource layer 31, a plurality of consumer entities 22 (i.e. at least one consumer entity 22) can be linked to the service layer 32, and a plurality of broker entities 30 (i.e. at least one broker entity 30) can be linked to the resource layer 31 and to the service layer 32 according to the present invention.

In following, the load balancing provided according to the present invention will be described exemplary by an example for a spontaneous order. Here, a distributed method or algorithm for a bargaining protocol is performed according to the present embodiment. Further, a distributed system for the resource layer 31 is described exemplary in following in more detail.

At the resource layer 31 brokers or broker entities respectively 30 are configured to behave like consumers or consumer entities 22 respectively and to trade with producers or producer entities 23 for electricity. The contracted power allocations are used on the service layer 31 to combine them to complex services for end-users or consumer entities 22 respectively.

Here, it has to be noted that, since in following the distributed system is described with regard to the resource layer 31 and since at the resource layer 31 brokers or broker entities respectively 30 are configured to behave like consumers or consumer entities 22 respectively, the calculations concerning the load balancing are performed at the resource layer 31 by the brokers or broker entities respectively 30. At the resource layer 31, energy brokers or broker entities 30 are or represent the consumers or consumer entities 22 of the power system.

In following, it is exemplified how a distributed coordination of the participants, i.e., of the producer entities 23 and of the consumer entities 22 converges to an equilibrium that fulfils a global objective, e.g. maximizes consumer or consumer entity 22 surpluses. It demonstrates how power system participants, i.e., the producer entities 23 and the consumer entities 22 are self-organizing and presents an example for the spontaneous order of a Catallaxy-based system. Furthermore, incentives for the participants, i.e., for the producer entities 23 and for the consumer entities 22 such that any deviation from this distributed coordination strategy results in a reduction of surplus. Hence, even when participants, i.e., the producer entities 23 and the consumer entities 22 behave selfish a fair and efficient allocation of power between consumers is reached.

Further, in the following, a model for balancing supply and demand in power systems according to an embodiment of the present invention is introduced and a distributed method or algorithm that ensures a load balancing according to the embodiment of the present invention is presented.

According to the present embodiment, a power system consists of a set of producers P (i.e. a set of producer entities 23) and of a set of consumers C (i.e. a set of consumer entities 22). According to the present embodiment, the consumers of the set of consumers C are energy brokers or broker entities 30 respectively at the resource layer 31. In particular, the brokers or broker entities 30 are configured to handle for consumers or consumer entities 22 at the resource layer 31 and are responsible for performing of calculations explained in following according to the present embodiment.

Further, the capacity of a producer $p \in P$ or producer entity 23 respectively is denoted in following by $C_p(t)$. According to Hayek's assumption that no entity has global information but negotiates with different participants, a producer or producer entity 23 respectively is not aware of all consumers or consumer entities 22 respectively in the power system and vice versa. The set of producers or producer entities 23, with which a consumer $c \in C$ or consumer entity 22 respectively negotiates, is denoted by $P(c)$. The other way around $C(p)$ is the set of the known consumers or consumer entities 30 respectively of the producer $p$ or producer entity 23 respectively. Furthermore, if $c \in C(p)$ then also $p \in P(c)$ holds.

Utility of a consumer $c$ or consumer entity 22 respectively is defined by a utility function $U_c$, which depends on the total power allocation $y_c$ of the consumer $c$ or consumer entity 22 respectively. Furthermore, the total power allocation is aggregated over power allocations negotiated between a producer or producer entity 23 and consumer or consumer entity 22 respectively (denoted for producer p and consumer $c$ as $x_{pc}(t)$).

Hence, the optimization problem for the power system according to the present embodiment is maximizing the aggregated utility of the allocation $y_c(t)$ over all consumers is the objective of the whole system, where $y_c(t)$ is the total of the allocations $x_{pc}(t)$ of all producers p or producer entities 23 of $c$. This problem is constrained by the capacity at the producers.

This optimization problem for the power system according to the present embodiment can be expressed by the following power balancing model:

maximize

$$\sum_{c \in C} U_c(y_c(t)) \qquad (1)$$

subject to

$$\sum_{p \in P(c)} x_{pc}(t) = y_c(t), \quad \forall c \in C \qquad (2)$$

$$\sum_{c \in C(p)} x_{pc}(t) = C_p(t), \quad \forall p \in P \qquad (3)$$

over

$$x_{pc}(t) \geq 0 . \qquad (4)$$

In the field of communication networks (see [14], [15]) a distributed method or algorithm for logarithmic utility functions has been developed. With logarithmic utility functions, any power allocation is consumed by the user. However, it implies a diminishing marginal utility: As more and more power is allocated to a user, allocating additional amounts will yield smaller and smaller additions to utility. Although this might be unrealistic for a single load, it may apply for an energy broker or broker entity 30. For a single load with an inelastic demand sigmoid utility functions can be used. This is shown in [16] for a similar problem for the resource allocation in the Internet.

In following, it is assumed according to the present embodiment that all consumers have a logarithmic utility function weighted by their willingness-to-pay $W_c$ of

$$U_c = W_c \log y_c \; . \tag{5}$$

Since the utility function as provided by equation (5) is concave and strictly increasing, the optimization problem provided by equations (1) to (4) has a unique optimum with respect to the total service rate $y_c$. However, the rates $x_{pc}$ are not necessarily unique at the optimum, because different rate allocations may sum up to the same total download rate $y_c$. Thus, many possible rate allocations may exist with respect to $x_{pc}$.

The global optimization problem can be divided according to the present embodiment into sub problems for each producer or producer entity 23 and for each consumer or consumer entity 22 respectively. These are derived according to the present embodiment from the Lagrange function (referred to also as "Lagrangian"). The Lagrangian is composed by the objective and the constraints of the optimization problem. Constraints are internalized by sums weighted by the Lagrange multipliers. Lagrange functions can be used, where the behavior of different participants is modeled as a constrained optimization problem. In this context, Lagrange multipliers are also denoted as shadow prices, because they express the price for an additional unit of a limited resource.

To solve the above presented optimization problem expressed by the equations (1) to (4) a distributed method or algorithm is provided according to the present embodiment of the present invention.

Here, the following an exemplary distributed bargaining method or algorithm is provided:

Consumer $c$ (or consumer entity 22 respectively):

$$\lambda_c(t+1) = \frac{W_c}{\max\left(\eta, \sum_{p \in P(c)} x_{pc}(t)\right)} \; . \tag{6}$$

Producer p (or producer entity 23 respectively):

$$x_{pc}(t+1) = \max\left( \varepsilon, \; x_{pc}(t)(1 - \bar{\gamma}) + \bar{\gamma}\, \frac{x_{pc}(t)\lambda_c(t)}{\sum_{d \in C(p)(t)} x_{pd}(t)\lambda_d(t)} C_p \right) \; . \tag{7}$$

Here, the distributed bargaining method or algorithm is performed with regard to different points of time t. Further, the method or algorithm is performed at different points of time $t$, wherein at time $t$+1 an update or re-computing of power allocations and offered prices respectively is performed, which is based on determined allocations and offered prices at time t.

According to the present embodiment of the present invention, the distributed method or algorithm is derived from the Lagrangian of the optimization problem. A consumer or consumer entity 22 is configured to set its willingness-to-pay information data $W_c$ and to compute offered price information data $\lambda_c$ per unit of power in (6). The producer or producer entity 23 is configured to allocate its generated power depending on the received price information data in (7). Since $\lambda_c$ is the price per unit of power, the product $X_{pc}\lambda_c$ is the total price which is transferred by consumer $c$ or consumer entity 22 respectively. Hence, the sum over all consumers or consumer nodes 22 in the denominator of (7) represents the total revenue of producer p or producer entity 23. The ratio between the revenue per consumer or consumer entity 22 and the total revenue determines the fraction for this consumer $c$ or consumer entity 22. This fraction is scaled by the capacity of the producer or producer entity 23 to get the absolute value.

To ensure stability, energy allocations in (7) are determined as exponential moving average. Although delays are not stated explicitly in the above presented distributed bargaining method or algorithm it is based on asynchronous updates. This means, each producer or each producer entity 23 and each consumer or consumer entity 22 can decide when to re-compute power allocations and offered prices, respectively. This model reflects a system for energy where available price information balance the power allocations. Since power can not be stored in the power grid the system is a spot system, where the current demand influences the future prices.

In a well-connected system offers and power allocations in steady-state are:

$$y_c^* = \sum_{p \in P8c)} x_{pc}^* = \frac{W_c \sum_{p \in P} C_p(t)}{\sum_{d \in C} W_c} \qquad (8)$$

and

$$\lambda_c^* = \frac{\sum_{d \in C} W_d}{\sum_{p \in P} C_p} \qquad (9)$$

respectively.

In the following, two further examples for a distributed method or algorithm according to the present invention are presented.

In the first example for a distributed method or algorithm according to the present invention, the power system is well connected and the equilibrium in (8) and (9) is reached. In the second example for a distributed method or algorithm according to the present invention, fewer connections between producers and consumers exist and equilibrium is not reached.

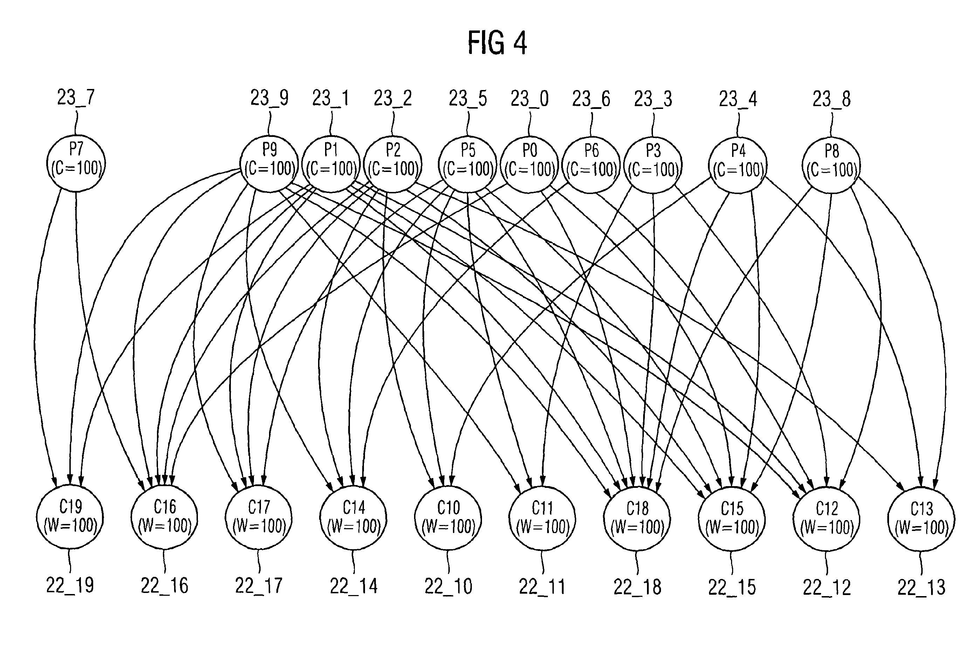

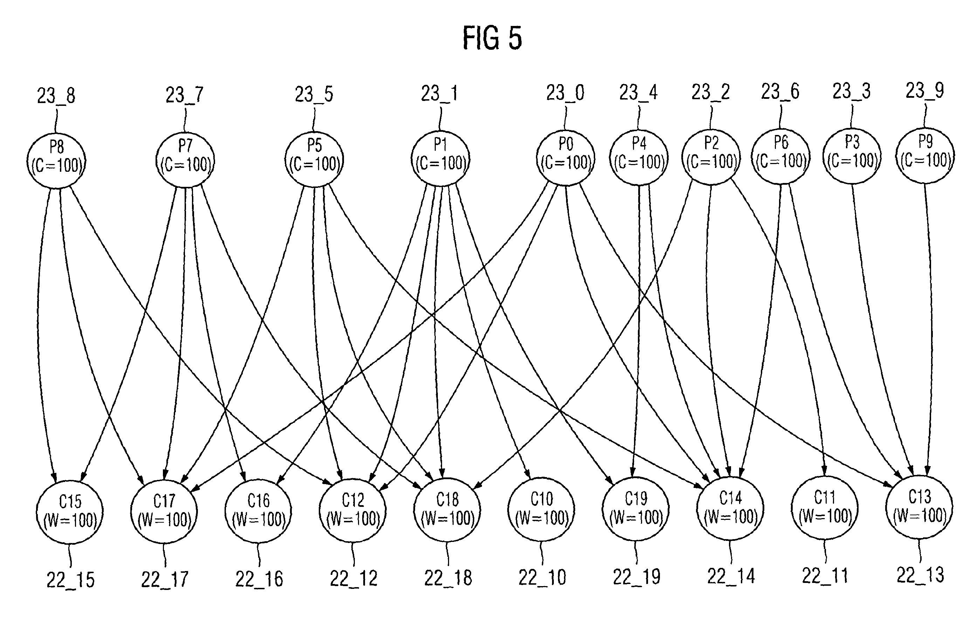

The setup of both examples is similar: Ten producers or producer entities 23_0 to 23_9 ("P0" to "P9") and ten consumers or consumer entities 22_10 to 22_19 (or "C10" to "C19") are participating in the power supply system. Each producer or producer entity 23_0 to 23_9 ("P0" to "P9") and each consumer has a capacity and a willingness-to-pay of C = 100 and W = 100, respectively. This means, in steady state each consumer gets a power allocation equal to its willingness-to-pay. The two examples for a distributed method or algorithm according to the present invention are different in the number of negotiations between producers and consumers only. The results of the two examples are depicted in Fig. 4 and in Fig. 5.

Fig. 4 refers to the first example for a distributed method or algorithm according to the present invention. In Fig. 4, each power consumer or consumer entity 22_10 to 22_19 ("C10" to "C19") has power allocations with multiple producers or producer entities 23_0 to 23_9 ("P0" to "P9") and vice versa. Hence, all power consumers receive the same power allocation for their willingness-to-pay and all power producers or producer entities 23_0 to 23_9 ("P0" to "P9") realize the same revenue. This is different in Fig. 5.

Fig. 5 refers to the second example for a distributed method or algorithm according to the present invention. In Fig. 5, some power consumers or consumer entities(i.e. 22_10, 22_11 ("C10", "C11")) are served by a single power producer or producer entity 23_0 to 23_9 ("P0" to "P9"). Both consumers get a smaller allocation compared to their willingness-to-pay. On the other hand, the consumer or consumer entity 22_13 ("C13") receives an over-proportional allocation because it is served by some producers or producer entities (i.e. 23_3, 23_9 ("P3", "P9")) exclusively.

The examples of Fig. 4 and Fig. 5 show that each participant has to look for alternative partners. In an implementation of a protocol this can be realized by starting negotiations with other participants continually. This is similar to peer-to-peer networks like BitTorrent in [19], where each peer maintains a list of other peers in the network. This list is updated from time to time. Furthermore, a peer selection method or algorithm chooses the best trading partners at the moment. However, also an exception is run and negotiations are started with new peers independently of the current state.

Market-oriented models are used for balancing supply and demand in power systems. Different models are proposed in the literature. These models rely on some kind of centralized coordination, e.g. auction platforms or order books. These centralized platforms define the rules for bidding in the system. These rules might not be applicable for all participants. Hence, by the present invention an approach called Catallaxy is proposed.

Here, participants are self-organizing and negotiate with different other participants. Power is contracted bilaterally. However, participants look for alternative partners. Thus, as demonstrated by simulations an equilibrium evolves.

To offer different kinds of services, a two-tier architecture is proposed by the present invention, where energy brokers trade energy on small time scales and assemble complex services to consumers or consumer entities respectively. This has different advantages: Energy brokers or broker entities respectively make use of the multiplexing effect of different consumers or consumer entities respectively. The variance in demand for a single consumer or consumer entity respectively is flattened by the others. Hence, energy brokers or broker entities respectively can offer allocation bundles for different time periods and fuzzy demands to consumers or consumer entities respectively.

To point out the advantages of the present invention in a more detailed way, a comparison of the power balancing mechanism according to the present invention with the centralized market model according to the state of art is provided.

Here, a description of a simple centralized market platform is provided. Then, it is used for comparison with the Catallaxy-based approach according to the present invention in the following.

In the centralized model, an energy producer or producer entity and a consumer or consumer entity submit their demand curves to the market platform. The bids are submitted for a specific time interval. For example, by setting the time interval to 15 minutes each day consists of 96 slots for which energy is traded. The market is cleared before the according time slot starts. The exact point of time depends on the implementation of the market.

Like in [12], a Walrasian auction to match supply and demand is used. Here, each energy producer or producer entity and each consumer or consumer entity determines her demand for every possible price. Energy supply of a producer or producer entity can be expressed as a negative demand. The demand function depends implicitly on the utility gained by the user for a specific amount of the commodity. For example, a simple electronic device needs a specific power level for operation. Hence, the user willing to run this device gains a specific utility when the power level is supplied. Utility is zero for all power levels below this threshold. Furthermore, any additional amount of power has no value for the user when she is only interested in running the device. Hence, the utility function for this example is a step function with a step at the power demand of the device.

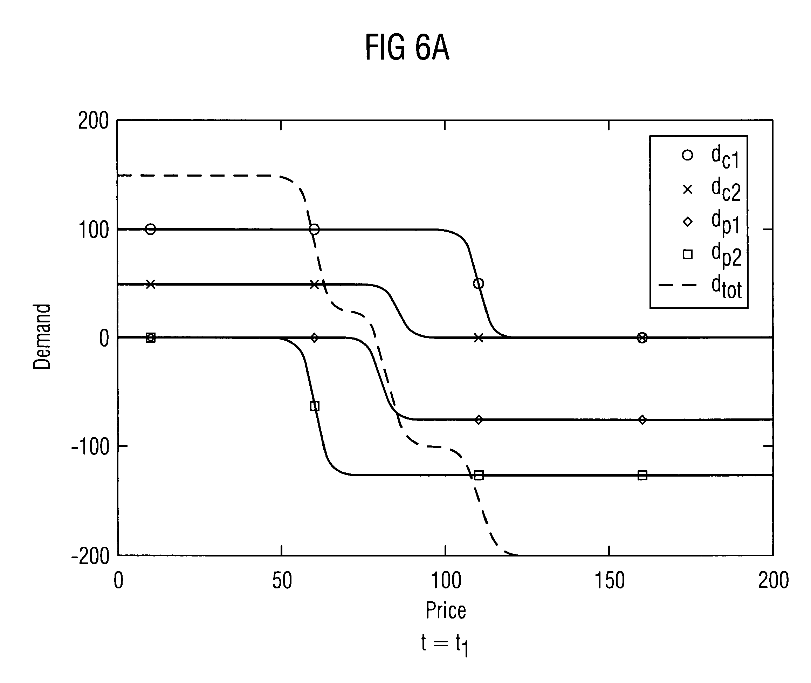

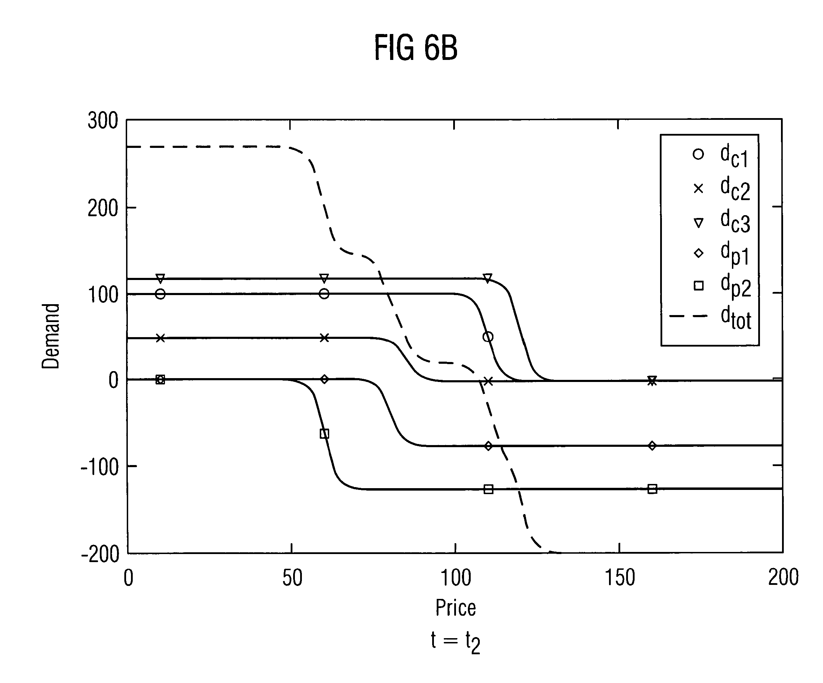

In models of power supply systems the discontinuities of step functions introduce integer constraints to the problem. To simplify the model often sigmoid functions are used instead. Sigmoid functions are continuous and differentiable. Hence, the problem becomes tractable. Fig. 6 presents the results for a small number of producers or producer entities p1, p2 and consumers or consumer entities c1 to c2 in Fig. 6a or c1 to c3 in Fig. 6b for two different points of time t=t1 and t=t2. Solid lines represent the demand functions ($d_{c1}$, $d_{c2}$, $d_{p1}$, $d_{p2}$ in Fig. 6a and $d_{c1}$, $d_{c2}$, $d_{c3}$, $d_{p1}$, $d_{p2}$ in Fig. 6b) of participants (c1, c2, p1, p2 in Fig. 6a and c1, c2, c3, p1, p2 in Fig. 6b). Energy producers or producer entities have negative demand functions. The dashed line represents the aggregation of all demands ($d_{c1}$, $d_{c2}$, $d_{p1}$, $d_{p2}$ in Fig. 6a and $d_{c1}$, $d_{c2}$, $d_{c3}$, $d_{p1}$, $d_{p2}$ in Fig. 6b). When the aggregated demand function is equal zero the system is in equilibrium, where demand and supply are equal. The equilibrium for the example in Fig 6 (a) and in Fig. 6(b) is $p_1^* = 78$ and $p_2^* = 107$ respectively.

Fig. 6 presents the outcome for two different points in time. At t = t1 in Figure 6(a) two producers or producer entities and two consumers or consumer entities participate in the system. At the equilibrium the energy allocations of both consumers or of both consumer entities are identical to their maximum demands. To a later point in time, i.e. t = t2, another consumer or consumer entity (i.e. c3) is present in the system. This consumer has a higher maximum demand and is willing to pay higher prices for it. Hence, at equilibrium of demand and supply the consumer or consumer entity c3 changes the allocation of power. Only consumers or consumer entities c1 and c3 can be serviced. The allocation of the consumer c2 drops in Fig. 6(b) to zero.

With these outcomes it is to be considered whether the allocation at t1 does provide any value for the consumer c2 when no power is allocated at t2. Also in the central model each participant acts autonomously and is interested in maximizing its own benefit. Hence, it is his own responsibility to define a strategy such that an allocation has a value for him. Different possibilities exist for consumer or consumer entity c2 to avoid this outcome. For example, the consumer can submit different demand functions for different points in time. Therefore, the consumer can compare between risk and benefit of its strategy and the alternatives. Furthermore, the consumer has no available information data about the strategies of the other participants but may try to forecast their behavior.

For a number of consumers or consumer entities the complexity of a cost-benefit analysis and a system forecast is not acceptable. They are interested in delegating this, e.g. to an energy broker or broker entity as provided according to the present invention. When, as by the present invention enabled, multiple energy brokers or broker entities are available another system on top of the simple centralized system evolves. To take these kinds of changes into account the Catallaxy-based model provided according to the present invention allows different kinds of negotiations at different points in time. Although the complexity of these models increase considerably compared to systems with predefined intervals and a single type of auction, it approaches the behavior of real power supply systems to a greater extent.

One example for a real power supply system is the European Energy Exchange (EEX). Here, only around 15% of the electricity consumed within the area is traded in the day-ahead auctions over the EEX [13]. This number increased over the last years. However, the major amount of electricity or power is traded in bilateral contracts. According to [13] most of these transactions have longer terms.

Thus, the present invention refers to a mechanism for load balancing in a power system, said power system comprising at least one power producer entity, at least one power consumer entity, at least one broker entity, and a resource layer. The load balancing is performed by said at least one broker entity at said resource layer, wherein said at least one broker entity is configured to behave or operate like said at least one consumer entity and to trade with said at least one producer entity for electricity. The present invention provides an improved mechanism for load balancing in power systems, in particular, in power systems with a large number of distributed energy resources. The present invention and can be applied or used with regard to all power systems utilizing and/or requiring a mechanism for load balancing. The present invention can be used, for example, for energy balancing in micro grids or in virtual power plants.

The present invention solves the object of providing of an improved power balancing mechanism in general by use of the following aspects:

- a two-tier architecture with resource layer and service layer, wherein an embodiment of the present invention is directed more to the resource layer; and/or

- a distributed control method for allocation of energy without any central control on the resource layer.

By dividing the energy balancing problem into a two layer problem, flexibility is increased and complexity is shifted from normal users or consumer entities to energy brokers or broker entities. Consumers or consumer entities and brokers or broker entities can agree on any type of negotiation or data exchange. This means, allocations for any time interval and any amount is feasible. Furthermore, brokers or broker entities make use of the multiplexing effect.

The distributed control method for balancing energy of producers or producer entities and of consumers or consumer entities with elastic demand ensures convergence to an equilibrium that fulfils a global objective. Efficiency and fairness for the energy allocation is ensured. The system is distributed and therefore it is robust and scalable. With an increasing number of distributed energy resources robustness and scalability becomes important.

While embodiments and applications of this invention have been shown and described above, it should be apparent to those skilled in the art, that many more modifications (than mentioned above) are possible without departing from the inventive concept described herein. The invention, therefore, is not restricted except in the spirit of the appending claims. Therefore, it is intended that the foregoing detailed description should be regarded as illustrative rather than limiting.

List of cited documents:

[1] S. McArthur, E. Davidson, V. Catterson, A. Dimeas, N. Hatziargyriou, F. Ponci, and T. Funabashi, "Multi-agent systems for power engineering applications part i: Concepts, approaches, and technical challenges," IEEE Transactions on Power Systems, vol. 22, no. 4, pp. 1743 - 1752, Nov. 2007.

[3] M. Hommelberg, B. van der Velde, C. Warmer, I. Kamphuis, and J. Kok, "A novel architecture for real-time operation of multi-agent based coordination of demand and supply," in IEEE Power and Energy Society General Meeting - Conversion and Delivery of Electrical Energy in the 21st Century, Jul. 2008, pp. 1-5.

[4] J. Kok, C. Warmer, and I. Kamphuis, "Powermatcher: multiagent control in the electricity infrastructure," in Proc. Fourth International Joint Conference on Autonomous Agents and Multiagent Systems (AAMAS05), July 2005.

[5] C. Block, D. Neumann, and C. Weinhardt, "A market mechanism for energy allocation in micro-chp grids," in Proc. of the 41st Annual Hawaii International Conference on System Sciences, Jan. 2008.

[9] H. Beitollahi and G. Deconinck, "Peer-to-peer networks applied to power grid," in the International conference on Risks and Security of Internet and Systems (CRiSIS) in conjunction with the IEEE GIIS'07, Marrakech, Morocco, Jul. 2007.

[10] T. Eymann, M. Reinicke, W. Streitberger, O. Rana, L. Joita, D. Neumann, B. Schnizler, D. Veit, O. Ardaiz, P. Chacin, I. Chao, F. Freitag, L. Navarro, M. Catalano, M. Gallegati, G. Giulioni, R. C. Schiaffino, and F. Zini, "Catallaxy-based grid markets," Multiagent Grid Syst., vol. 1, no. 4, pp. 297-307, 2005.

[12] K. Kok, Z. Derzsi, J. Gordijn, M. Hommelberg, C. Warmer, R. Kamphuis, and H. Akkermans, "Agent-based electricity balancing with distributed energy resources, a multiperspective case study," in HICSS '08: Proceedings of the Proceedings of the 41st Annual Hawaii International Conference on System Sciences, 2008.

[13] A. Ockenfels, V. Grimm, and G. Zoettl, "Electricity market design - the pricing mechanism of the day ahead electricity spot market auction on the EEX," Mar. 2008. [Online]. Available: http://www.eex.com/de/document/38615/gutachteneex ockenfels e.pdf

[14] K. Eger and U. Killat, "Resource pricing in peer-to-peer networks," IEEE Communications Letters, vol. 11, no. 1, pp. 82-84, Jan. 2007.

[15] -, "Fair resource allocation in peer-to-peer networks (extended version)," Computer Communications, Special Issue: Advances in Communication Networking, Elsevier, vol. 30, no. 16, pp. 3046-3054, Nov. 2007.

[16] J.-W. Lee, R. Mazumdar, and N. Shroff, "Non-convex optimization and rate control for multi-class services in the internet," IEEE/ACM Transactions on Networking, vol. 13, no. 4, pp. 827- 840, Aug. 2005.

[19] B. Cohen, "Incentives build robustness in BitTorrent," in Proc. 1st Workshop on Economics of Peer-to-Peer Systems, Berkeley, Jun. 2003.

**Claims**

1. A method for load balancing in a power system (2), said power system (2) comprising at least one power producer entity (23, 23_0 - 23_9), at least one power consumer entity (22, 22_10 - 22_19), at least one broker entity (30), and a resource layer (31), wherein said method comprises performing of said load balancing by said at least one broker entity (30) at said resource layer (31), wherein said at least one broker entity (30) is configured to operate like said at least one consumer entity (22, 22_10 - 22_19) and to exchange data with said at least one producer entity (23, 23_0 - 23_9) for trading electricity.

2. The method according to claim 1, wherein said at least one producer entity (23, 23_0 - 23_9) is only aware of such consumer entities in said power system (2) with which said at least one producer entity (23, 23_0 - 23_9) negotiates.

3. The method according to claim 1 or 2, wherein said at least one consumer entity (22, 22_10 - 22_19) is only aware of such producer entities in said power system (2) with which said at least one consumer entity (22, 22_10 - 22_19) negotiates.

4. The method according to at least one of the preceding claims, wherein said performing of said load balancing comprises a solving of an optimization problem for said power system (2), wherein said optimization problem comprises a maximizing of an aggregated utility of a power allocation over all consumer entities of said power system (2), wherein said aggregated utility is a total of power allocations of all producer entities of a consumer entity (22, 22_10 - 22_19) for each consumer entity (22, 22_10 - 22_19) in said power system (2) and wherein said optimization problem is constrained by capacity at producer entities of said power system (2).

5. The method according to claim 4, wherein said performing of said load balancing comprises a dividing of said optimization problem into sub-problems for each producer entity (23, 23_0 - 23_9) and for each consumer entity (22, 22_10 - 22_19) in said power system (2).

6. The method according to claim 5, wherein said sup-problems are derived from a Lagrange function.

7. The method according to at least one of claims 4 to 6, wherein said performing of said load balancing comprises a solving of said optimization problem by a distributed method.

8. The method according to claim 6 and 7, wherein said distributed method is derived from a Lagrangian of said optimization problem.

9. The method according to claim 7 or 8, wherein said performing of said load balancing comprises a setting of a value of willingness to pay of said at least one consumer entity (22, 22_10 - 22_19) and computing of a value of offered price per unit of power.

10. The method according to claim 9, wherein said performing of said load balancing comprises an allocating of power generated by said at least one producer for said at least one consumer entity (22, 22_10 - 22_19) depending on said value of offered price per unit of power.

**11.** The method according to claim 10, wherein said performing of said load balancing comprises a determining of a fraction for said at least one consumer entity (22, 22_10 - 22_19) by use of a ratio between a revenue for each consumer entity (22, 22_10 - 22_19) in said power system (2), said at least one producer is aware of, and a total revenue of said at least one producer.

**12.** The method according to claim 11, wherein said performing of said load balancing comprises a scaling of said fraction by capacity of said at least one producer.

**13.** The method according to at least one of the preceding claims, wherein said method comprises a deciding of performing of said load balancing by said at least one producer entity (23, 23_0 - 23_9) and/or by said at least one consumer entity (22, 22_10 - 22_19).

**14.** A broker entity (30), wherein said broker entity (30) is an entity of a power system (2), said power system (2) comprising at least one power producer entity (23, 23_0 - 23_9), at least one power consumer entity (22, 22_10 - 22_19), at least one broker entity (30), and a resource layer (31), and wherein said broker entity (30) is configured to:

  - perform a load balancing in said power system (2) at said resource layer (31);
  - operate like said at least one consumer entity (22, 22_10 - 22_19); and
  - exchange data with said at least one producer entity (23, 23_0 - 23_9) for trading electricity.

**15.** A system, wherein said system is configured to perform a load balancing in a power system (2) and wherein said system comprises at least one broker entity (30) according to claim 14.

# FIG 1

# FIG 2

# FIG 3

# FIG 4

EP 2 251 822 A1

# FIG 5

EP 2 251 822 A1

FIG 6A

# FIG 6B

t = t₂

Europäisches
Patentamt

European
Patent Office

Office européen
des brevets

## EUROPEAN SEARCH REPORT

Application Number

EP 09 01 1338

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OSCAR ARDAIZ ET AL: "The catallaxy approach for decentralized economic-based allocation in Grid resource and service markets" APPLIED INTELLIGENCE ; THE INTERNATIONAL JOURNAL OF ARTIFICIALINTELLIGENCE, NEURAL NETWORKS, AND COMPLEX PROBLEM-SOLVING TE, KLUWER ACADEMIC PUBLISHERS, BO LNKD-DOI:10.1007/S10489-006-9650-9, vol. 25, no. 2, 1 October 2006 (2006-10-01), pages 131-145, XP019390671 ISSN: 1573-7497 * abstract * * 1. Introduction 3. The Catallactic approach applied to Grid markets * ----- | 1-15 | INV. G06Q10/00 G06Q30/00 |
| X,D | EGER ET AL: "Fair resource allocation in peer-to-peer networks (extended version)" COMPUTER COMMUNICATIONS, ELSEVIER SCIENCE PUBLISHERS BV, AMSTERDAM, NL LNKD-DOI:10.1016/J.COMCOM.2007.05.039, vol. 30, no. 16, 13 October 2007 (2007-10-13), pages 3046-3054, XP022297343 ISSN: 0140-3664 * abstract * * 2. Peer-to-peer model 3. Fairness 4. Distributed algorithm * ----- -/-- | 1-15 | TECHNICAL FIELDS SEARCHED (IPC)  G06Q |

The present search report has been drawn up for all claims

| Place of search | Date of completion of the search | Examiner |
|---|---|---|
| The Hague | 26 April 2010 | Tiago Pinheiro |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 09 01 1338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOLJA EGER ET AL: "Towards P2P Technologies for the Control of Electrical Power Systems" PEER-TO-PEER COMPUTING , 2008. P2P '08. EIGHTH INTERNATIONAL CONFERENCE ON, IEEE, PISCATAWAY, NJ, USA, 8 September 2008 (2008-09-08), pages 180-181, XP031322336 ISBN: 978-0-7695-3318-6 * the whole document * | 1-15 | |

-----

| | TECHNICAL FIELDS SEARCHED (IPC) |
|---|---|

The present search report has been drawn up for all claims

| Place of search | Date of completion of the search | Examiner |
|---|---|---|
| The Hague | 26 April 2010 | Tiago Pinheiro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&&: member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. McArthur ; E. Davidson ; V. Catterson ; A. Dimeas ; N. Hatziargyriou ; F. Ponci ; T. Funabashi.** Multi-agent systems for power engineering applications part i: Concepts, approaches, and technical challenges. *IEEE Transactions on Power Systems,* November 2007, vol. 22 (4), 1743-1752
- **M. Hommelberg ; B. van der Velde ; C. Warmer ; I. Kamphuis ; J. Kok.** A novel architecture for real-time operation of multi-agent based coordination of demand and supply. *IEEE Power and Energy Society General Meeting - Conversion and Delivery of Electrical Energy in the 21st Century,* July 2008, 1-5
- **J. Kok ; C. Warmer ; I. Kamphuis.** Powermatcher: multiagent control in the electricity infrastructure. *Proc. Fourth International Joint Conference on Autonomous Agents and Multiagent Systems (AAMAS05),* July 2005
- **C. Block ; D. Neumann ; C. Weinhardt.** A market mechanism for energy allocation in micro-chp grids. *Proc. of the 41st Annual Hawaii International Conference on System Sciences,* January 2008
- **H. Beitollahi ; G. Deconinck.** Peer-to-peer networks applied to power grid. *the International conference on Risks and Security of Internet and Systems (CRiSIS) in conjunction with the IEEE GIIS'07,* July 2007
- **T. Eymann ; M. Reinicke ; W. Streitberger ; O. Rana ; L. Joita ; D. Neumann ; B. Schnizler ; D. Veit ; O. Ardaiz ; P. Chacin.** Catallaxy-based grid markets. *Multiagent Grid Syst.,* 2005, vol. 1 (4), 297-307
- **K. Kok ; Z. Derzsi ; J. Gordijn ; M. Hommelberg ; C. Warmer ; R. Kamphuis ; H. Akkermans.** Agent-based electricity balancing with distributed energy resources, a multiperspective case study. *HICSS '08: Proceedings of the Proceedings of the 41st Annual Hawaii International Conference on System Sciences,* 2008
- **A. Ockenfels ; V. Grimm ; G. Zoettl.** *Electricity market design - the pricing mechanism of the day ahead electricity spot market auction on the EEX,* March 2008, http://www.eex.com/de/document/38615/ gutachteneex ockenfels e.pdf
- **K. Eger ; U. Killat.** Resource pricing in peer-to-peer networks. *IEEE Communications Letters,* January 2007, vol. 11 (1), 82-84
- Fair resource allocation in peer-to-peer networks (extended version). Computer Communications, Special Issue: Advances in Communication Networking. Elsevier, November 2007, vol. 30, 3046-3054
- **J.-W. Lee ; R. Mazumdar ; N. Shroff.** Non-convex optimization and rate control for multi-class services in the internet. *IEEE/ACM Transactions on Networking,* August 2005, vol. 13 (4), 827-840
- Incentives build robustness in BitTorrent. **B. Cohen.** Proc. 1st Workshop on Economics of Peer-to-Peer Systems. Berkeley, June 2003